# EUROPÄISCHE PATENTSCHRIFT

(11) **EP 2 008 291 B1**
(45) Veröffentlichungstag und Bekanntmachung des Hinweises auf die Patenterteilung: **05.08.2015**
(21) Anmeldenummer: 07765261.8
(22) Anmeldetag: 17.04.2007
(51) Int. Cl.: H01H 9/18

(54) **ELEKTRISCHES INSTALLATIONSGERÄT**
ELECTRICAL INSTALLATION DEVICE
APPAREILLAGE D'INSTALLATION ÉLECTRIQUE

(30) Priorität: 20.04.2006 DE 202006006354 U
(43) Veröffentlichungstag der Anmeldung: 31.12.2008
(73) Patentinhaber: Merten GmbH, 51674 Wiehl (DE)
(72) Erfinder: SCHLICKER, Michael, 51580 Reichshof (DE); HIDDE, Axel, 57076 Siegen (DE)
(74) Vertreter: Von Kreisler Selting Werner - Partnerschaft von Patentanwälten und Rechtsanwälten mbB
(86) Internationale Anmeldenummer: PCT/EP2007/053723
(87) Internationale Veröffentlichungsnummer: WO 2007/122141

(56) Entgegenhaltungen:
- EP-A1- 1 467 387
- EP-A1- 1 610 422
- DE-B3- 10 246 399
- DE-B3- 10 251 178
- DE-U1- 7 802 835
- US-A1- 2002 085 370
- US-A1- 2006 072 302
- H. BANGERT, H. KAMINSKI, M. BEAUJEAN, H. BRAUN: "New applications and practical examples involving in-mould decoration" BAYER ATI 7007, [Online] 30. Juni 1998 (1998-06-30), XP002440367 Leverkusen Gefunden im Internet: URL:http://pc-films.com/pc-films/emea/en/d ocguard/A7007.pdf?docId=1850> [gefunden am 2007-07-02]

## Beschreibung

Die Erfindung betrifft ein elektrisches Installationsgerät mit einem für die Wandmontage vorgesehenen Tragrahmen, einem an dem Tragrahmen befestigten Sockel, einem dem Tragrahmen vorgesetzten Sichtrahmen und einer Flächenleuchte. Insbesondere betrifft die Erfindung einen elektrischen Schalter oder Taster bzw. eine Steckdose.

Es ist bekannt, Schalter oder andere Installationsgeräte mit einem Orientierungslicht auszustatten, das es ermöglicht, das Installationsgerät im Dunkeln aufzufinden, um beispielsweise die Raumbeleuchtung einzuschalten.

In EP 1 467 387 A1 ist ein beleuchteter Schalter beschrieben, bei dem das Orientierungslicht durch ein Lichtleiterelement erzeugt wird. Das Licht tritt seitlich am Rand der Schaltwippe aus und beleuchtet die die Schaltwippe umgebende Frontplatte. In DE 20 2004 009 529 U1 ist ein Schalter beschrieben, der eine in die Schaltwippe integrierte Elektrolumineszenzleuchtfläche aufweist.

EP 1 610 422 A1 beschreibt eine elektrische Steckvorrichtung, auf welche sich Anspruch 1 im Oberbegriff bezieht. Eine mit einem Leuchtmittel versehene Leiterplatte wird an der Unterseite eines Steckdosenzentralstücks befestigt. Das Steckdosenzentralstück ist mit einem Lichtleitelement verbindbar und wird von einem Verkleidungsteil bedeckt.

US 2002/0085370 A1 beschreibt einen Schalterrahmen mit einer Leuchtfolie, die zwischen einer für die Wandmontage vorgesehenen Befestigungsplatte und einem die Befestigungsplatte bedeckenden transparenten Plattenrahmen angeordnet ist.

Der vorliegenden Erfindung liegt die Aufgabe zugrunde, ein elektrisches Installationsgerät mit Orientierungslicht zu schaffen, das einfach aufgebaut ist und wahlweise mit oder ohne Orientierungslicht betrieben werden kann.

Das erfindungsgemäße Installationsgerät ist durch den Anspruch 1 definiert. Bei ihm ist die Flächenleuchte in den Sichtrahmen integriert und über eine Steckverbindung mit einem an dem Sockel befestigbaren Stromkasten verbunden. Die Leuchtfunktion des Sichtrahmens bewirkt eine indirekte Beleuchtung, bei der nicht das Betätigungsorgan unmittelbar leuchtet, sondern dessen Umgebung. Eine zu starke Dominanz des Orientierungslichtes wird auf diese Weise vermieden.

Ein Vorteil besteht darin, dass das elektrische Installationsgerät sowohl mit als auch ohne das Orientierungslicht geliefert bzw. benutzt werden kann. Durch Herstellen der Steckverbindung wird das Orientierungslicht in Funktion gesetzt.

Gemäß einer bevorzugten Ausgestaltung der Erfindung ist vorgesehen, dass der Sichtrahmen aus einem Grundrahmen und einem darauf befestigten transparenten Deckrahmen besteht, wobei die Flächenleuchte zwischen Grundrahmen und Deckrahmen enthalten ist. Es besteht ferner die Möglichkeit, den Stromkasten und den Sichtrahmen, in den das Orientierungslicht integriert ist, als Bausatz für das Nachrüsten von handelsüblichen Lichtschaltern zu liefern.

Die Flächenleuchte kann parallel zu der Umfangsfläche oder parallel zu der Frontfläche des Sichtrahmens angeordnet sein. Sie kann mit einem Farbfilter bedeckt sein, so dass die Farbe des Orientierungslichts verändert bzw. gewählt werden kann.

Das erfindungsgemäße Installationsgerät erfüllt die Anforderungen an die Umweltverträglichkeit. Insbesondere werden keinerlei Geräusche verursacht. Die elektrische Versorgung kommt ohne Nullleiter und ohne Schutzleiter aus.

Im folgenden werden unter Bezugnahme auf die Zeichnungen Ausführungsbeispiele der Erfindung näher erläutert.

Es zeigen:
- Fig. 1: ein Explosionsbild einer ersten Ausführungsform eines Installationsgerätes,
- Fig. 2: einen Schnitt durch den Sichtrahmen des Installationsgerätes und
- Fig. 3: einen Schnitt durch einen Sichtrahmen mit parallel zur Frontfläche verlaufender Flächenleuchte.

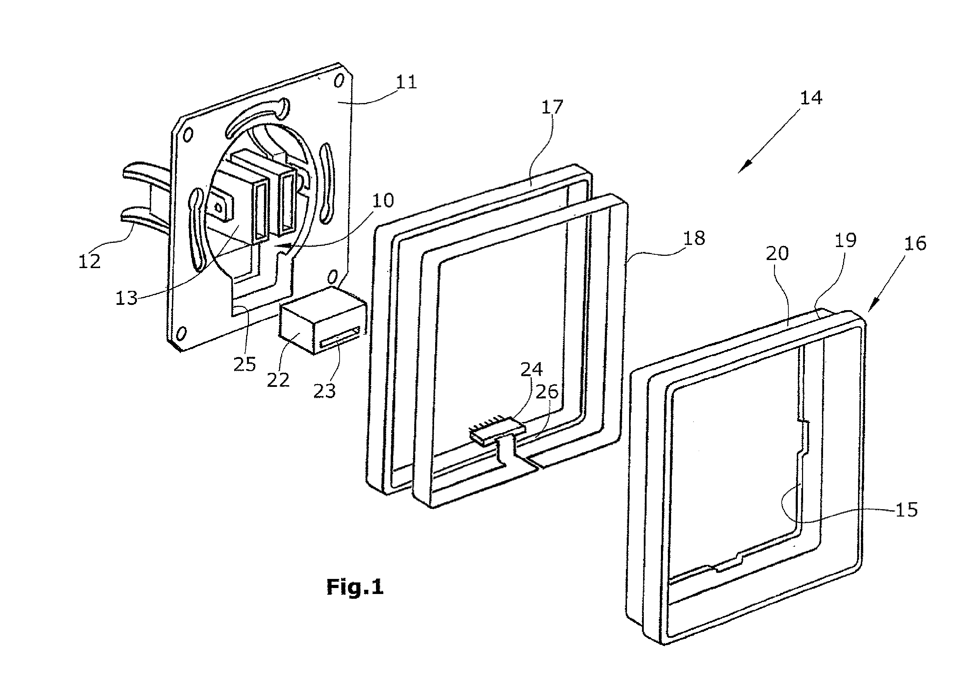

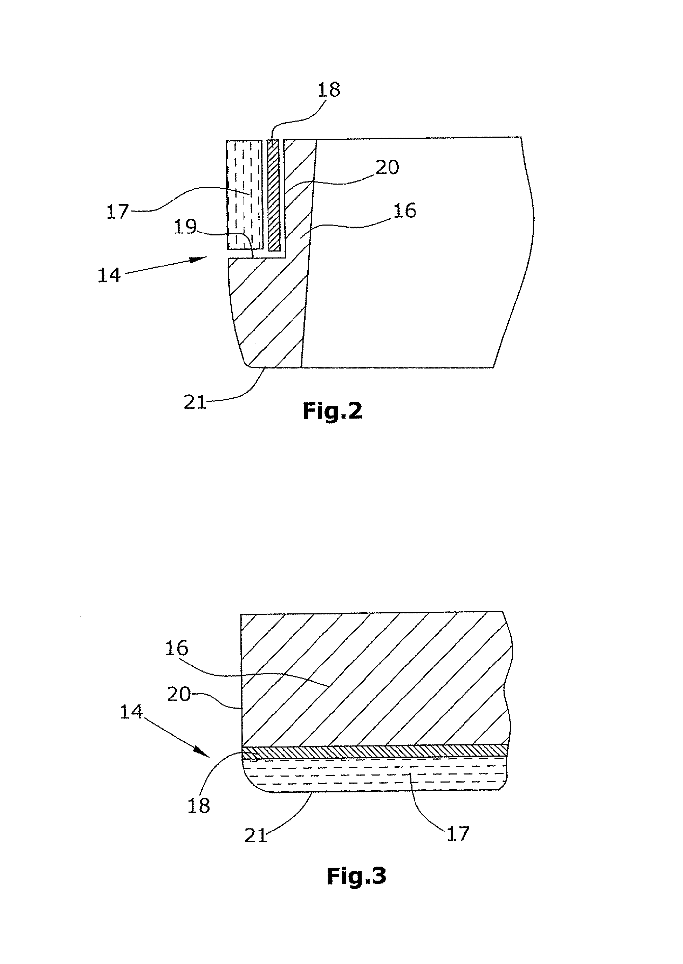

Das in den Figuren 1 und 2 dargestellte elektrische Installationsgerät entspricht von seinem Grundaufbau her einem üblichen Schalter, der in einer Wanddose installiert werden kann. Das Installationsgerät weist einen aus Isolierstoff bestehenden Sockel 10 auf, der an einem metallischen Tragrahmen 11 befestigt ist. Der Tragrahmen 11 weist eine Frontplatte auf. Er ist mit Krallen 12 versehen, die ausgespreizt werden können, um das Installationsgerät an einer Wanddose zu befestigen.

An dem Sockel 10 ist die Schaltwippe 13 schwenkbar gelagert. In die Schaltwippe 13 greift ein (nicht dargestelltes) Betätigungselement ein, mit welchem der Schalter manuell betätigt wird.

Dem Tragrahmen 11 ist ein Sichtrahmen 14 vorgesetzt, welcher ein Fenster 15 begrenzt. Der Sichtrahmen 14 besteht aus einem rechteckigen Grundrahmen 16 und einem den Grundrahmen 16 umgebenden transparenten Deckrahmen 17. Zwischen Grundrahmen 16 und Deckrahmen 17 befindet sich die Flächenleuchte 18 in Form eines mehrschichtigen Folienmaterials.

Der rechteckige Grundrahmen 16 ist an seiner Außenseite im rückwärtigen Bereich mit einer stufenförmigen umlaufenden Aussparung 19 versehen, weiche die zurückgesetzte Umfangsfläche 20 bildet. Die Umfangsfläche 20 wird von der Flächenleuchte 18 bedeckt bzw. umgeben, die ihrerseits von dem Deckrahmen 17 bedeckt wird. Der transparente Deckrahmen 17 ist von der Rückseite her auf den Grundrahmen 16 aufgeschoben und seine Außenseite liegt bündig zu der Außenseite des dicken Teils des Grundrahmens 16.

An dem Socke! 10 bzw. dem Tragrahmen 11 ist ein Stromkasten 22 befestigt, der eine Steckerfassung 23 für einen mehrpoligen Stecker 24 der Flächenleuchte 18 aufweist. Der Stromkasten 22 ist in einer Aussparung 25 des Tragrahmens 11 eingesetzt, so dass die Steckerfassung 23 nach vorne weist.

Die Flächenleuchte 18 ist eine Elektrolumineszenzfolie, die über ein flexibles Kabel 26 mit dem Stecker 24 verbunden ist. Die Elektrolumineszenzfolie bildet einen abgewickelten elektrischen Kondensator, wobei zwei in der Ebene parallel geführte, isoliert angeordnete Leiterbahnzüge - je mit einer elektrisch leitenden Folie, wovon eine Folie eine Transparenz aufweist - an eine elektrische Wechselspannung gelegt sind. Die Spannungen betragen > 100 V und > 25 Hz, bei äußerst geringem Verbrauch von 20 ... 30 µA, was einer Leistungsaufnahme von 2 ... 3 mW und einem Monatsverbrauch von 1,4 ... 2,2 Wh entspricht.
Die Lumineszenzfolie weist ein nicht leitendes Basissubstrat, wie z. B. Polyester oder FR4-Leiterplattenmaterial, auf, an dem die rückwärtigen Elektroden und die Anschlusselektroden durch Silber-/Karbondruck aufgebracht werden. Darüber liegen 2 oder 3 Lagen Dielektrikum, die für eine sichere räumliche Potentialtrennung zwischen den Elektroden sorgen. Die gegen die Elektroden isoliert aufgebrachte Phosphorschicht bestimmt die Farbwiedergabe der Lichtquelle. Dieser Aufbau wird durch einen transparenten ITO (Indium Zinn Oxyd)-Polyesterfilm abgeschlossen, dessen dem Phosphor zugewandte elektrisch leitende Innenseite über die zweite elektrisch kontaktierte Elektrode den Gegenpol/ das -potential bildet.

Der Schichtenaufbau kann auch mit einem mit Phosphor zu bedruckenden ITO-Polyesterfilm beginnen und endet - nach entsprechendem Aufbau wie oben - mit einer die Kontaktierung enthaltenden UV-festen Schutzlage aus Polyester.

Bei entsprechendem elektrischen Anschluss baut sich zwischen den Elektroden ein die Phosphorschicht anregendes Wechselfeld auf; die Phosphorschicht leuchtet durch die transparente ITO-Elektrode farblich - entsprechend der gewählten Beschichtung.

Phosphorfarben können sein Grün-Blau, Gelb-Grün, Weiß, Blau-Grün und Grün-Gelb; bekanntermaßen erscheinen die Farben 'bonbonfarben'. Dieser Effekt/Farbton lässt sich jedoch auch durch Überlagerung von Farbfiltern ändern.

Die Lebensdauer - man spricht in diesem Zusammenhang von Halbwertszeiten, wie z. B. der Zeit des Absinkens der Leuchtkraft auf den halben Anfangswert - ist neben dem Aufbau der Lagen (Phosphor) abhängig von der UV-Festigkeit der eingesetzten Materialien, der angelegten elektrischen Wechselspannung +/- 100 V sowie der eingesetzten Frequenz < 400 Hz.

Senkt man zu Lebensdaueranfang Spannung und Frequenz - damit geht auch natürlich ein Verlust an Lichtleistung einher - kann mit Erreichen der Halbwertszeit durch Anheben von Spannung und Frequenz die Lichtleistung an das vorherige Niveau angeglichen werden, was die Lebenserwartung und -dauer erhöht.

Der Sichtrahmen 14 und der Stromkasten 22 bilden einen Bausatz für das Nachrüsten von handelsüblichen Lichtschaltern.

Figur 3 zeigt einen Schnitt durch eine alternative Ausführungsform des Sichtrahmens 14. Die Flächenleuchte 18 liegt hierbei auf der Frontfläche 21 des Grundrahmens 16 an und ist von einem transparenten Deckrahmen 17 bedeckt, der parallel zu der Frontfläche 21 verläuft. In diesem Fall strahlt die Flächenleuchte nicht seitlich ab sondern frontal.

## Patentansprüche

1. Elektrisches Installationsgerät mit einem für die Wandmontage vorgesehenen Tragrahmen (11), einem an dem Tragrahmen (11) befestigten Sockel (10), einem dem Tragrahmen vorgesetzten Sichtrahmen (14) und einer Flächenleuchte (18), die über eine Steckverbindung (23, 24) und einen Stromkasten (22) mit dem Sockel verbunden ist,
**dadurch gekennzeichnet,**
**dass** die Flächenleuchte (18) dadurch in den Sichtrahmen (14) integriert ist, dass der Sichtrahmen (14) aus einem Grundrahmen (16) und einem darauf befestigten transparenten Deckrahmen (17) besteht, wobei die Flächenleuchte (18) zwischen Grundrahmen (16) und Deckrahmen (17) enthalten ist.

2. Installationsgerät nach Anspruch 1, **dadurch gekennzeichnet, dass** der Sichtrahmen (14) eine Frontfläche (21) und eine Umfangsfläche (20) aufweist und dass die Flächenleuchte (18) parallel zu der Umfangsfläche (20) angeordnet ist.

3. Installationsgerät nach Anspruch 1, **dadurch gekennzeichnet, dass** der Sichtrahmen (14) eine Frontfläche (21) und eine Umfangsfläche (20) aufweist und dass die Flächenleuchte (18) parallel zu der Frontfläche (21) angeordnet ist.

4. Installationsgerät nach einem der Ansprüche 1 - 3, **dadurch gekennzeichnet, dass** die Flächenleuchte (18) mit einem Farbfilter bedeckt ist.

5. Installationsgerät nach einem der Ansprüche 1 - 4, **dadurch gekennzeichnet, dass** die Flächenleuchte (18) aus einem mehrschichtigen Folienmaterial besteht.

6. Installationsgerät nach einem der Ansprüche 1 - 5, **dadurch gekennzeichnet, dass** die Flächenleuchte (18) eine Elektrolumineszenzfolie ist.

## Claims

1. An electrical installation device comprising a wall-mountable support frame (11), a base (10) fastened to the support frame (11), a viewing frame (14) arranged in front of the support frame and a surface luminaire (18) connected to the base via a plug connection (23, 24) and a connection box (22),
**characterized in that**
the surface luminaire (18) is integrated into the viewing frame (14) and that the viewing frame (14) consists of a base frame (16) and a transparent cover frame (17) fastened thereon, wherein the surface luminaire (18) is arranged between the base frame (16) and the cover frame (17).

2. The installation device according to claim 1, **characterized in that** the viewing frame (14) comprises a front face (21) and a peripheral face (20) and that the surface luminaire (18) is arranged parallel to the peripheral face (20).

3. The installation device according to claim 1, **characterized in that** the viewing frame (14) comprises a front face (21) and a peripheral face (20) and that the surface luminaire (18) is arranged parallel to the front face (21).

4. The installation device according to any one of claims 1 - 3, **characterized in that** the surface luminaire (18) is covered by a color filter.

5. The installation device according to any one of claims 1 - 4, **characterized in that** the surface luminaire (18) consists of a multi-layered film material.

6. The installation device according to any one of claims 1 - 5, **characterized in that** the surface luminaire (18) is an electroluminescence film.

## Revendications

1. Appareil d'installation électrique avec un cadre support (11) prévu pour un montage mural, une base (10) fixée sur le cadre support (11), un cadre cache (14) et un luminaire de surface (18) qui est relié à la base par une connexion à fiche (23, 24) et un boîtier électrique (22), **caractérisé en ce que** le luminaire de surface (18) est intégré dans le cadre cache (14) du fait que le cadre cache (14) est constitué d'un cadre de base (16) et d'un cadre de couverture transparent (17) fixé sur le cadre de base, le luminaire de surface (18) étant contenu entre le cadre de base (16) et le cadre de couverture (17).

2. Appareil d'installation selon la revendication 1, **caractérisé en ce que** le cadre de couverture (14) comporte une face avant (21) et une face périphérique (20) et **en ce que** le luminaire de surface (18) est disposé parallèlement à la face périphérique (20).

3. Appareil d'installation selon la revendication 1, **caractérisé en ce que** le cadre de couverture (14) comporte une face avant (21) et une face périphérique (20) et **en ce que** le luminaire de surface (18) est disposé parallèlement à la face avant (21).

4. Appareil d'installation selon l'une des revendications 1 à 3, **caractérisé en ce que** le luminaire de surface (18) est recouvert d'un filtre couleur.

5. Appareil d'installation selon l'une des revendications 1 à 4, **caractérisé en ce que** le luminaire de surface (18) consiste en un matériau en film multicouche.

6. Appareil d'installation selon l'une des revendications 1 à 5, **caractérisé en ce que** le luminaire de surface (18) est un film électroluminescent.
